# EUROPÄISCHE PATENTSCHRIFT

(11) **EP 1 841 546 B1**
(45) Veröffentlichungstag und Bekanntmachung des Hinweises auf die Patenterteilung: **30.04.2008**
(21) Anmeldenummer: 05820503.0
(22) Anmeldetag: 16.12.2005
(51) Int. Cl.: B05D 7/14

(54) **VERFAHREN ZUM BESCHICHTEN VON METALLEN**
METHOD FOR COATING METALS
PROCEDE DE REVETEMENT DE METAUX

(30) Priorität: 20.12.2004 DE 102004062454
(43) Veröffentlichungstag der Anmeldung: 10.10.2007
(73) Patentinhaber: BASF SE, 67056 Ludwigshafen (DE)
(72) Erfinder: WITTELER, Helmut, 67157 Wachenheim (DE); BERTKAU, Walter, 67069 Ludwigshafen (DE)
(86) Internationale Anmeldenummer: PCT/EP2005/013590
(87) Internationale Veröffentlichungsnummer: WO 2006/066824

(56) Entgegenhaltungen:
- US-A- 3 084 066
- US-A- 3 443 982
- US-A- 5 264 254
- US-B1- 6 280 800

## Beschreibung

Vorliegende Erfindung betrifft ein Verfahren zum Beschichten metallischer Oberflächen mit einem Copolymer aus Olefinen und/oder Dienen, sauren Monomeren sowie optional weiteren Monomeren, wobei die metallische Oberfläche mit Öl- und/oder Fett kontaminiert ist und die Kontamination vor dem Beschichten nicht entfernt wird. Die Erfindung betrifft weiterhin eine metallische Oberfläche, die mittels des Verfahrens erhältlich ist.

Metallische Gegenstände und Materialien, wie beispielsweise Metallbänder aus Stahl oder Aluminium, werden zum temporären Korrosionsschutz oder zur Erleichterung weiterer Verarbeitungsschritte häufig eingefettet oder eingeölt. Beispiele für Öle zum Ein-ölen metallischer Oberflächen sind in US 4,889,648 offenbart. Weiterhin können sie auch im Zuge von Transport, Verarbeitung oder Lagerung an sich unbeabsichtigt mit Ölen oder Fetten verunreinigt werden.

Eine derartige Fett- oder Ölschicht auf der Oberfläche kann nachfolgende Behandlungsschritte oder Beschichtungsschritte, wie beispielsweise Korrosionsschutzbehandlungen oder das Aufbringen von Lackschichten erheblich beeinträchtigen. Beispielsweise kann die Lackhaftung erheblich verschlechtert werden. Dies gilt insbesondere, wenn die nachfolgende Behandlung mit wasserbasierenden Formulierungen vorgenommen wird.

Es ist daher üblich, die Oberfläche von Metallen vor weiteren Bearbeitungsschritten zu entölen bzw. zu entfetten. Das Entfetten bzw. Entölen ist jedoch ein vergleichsweise aufwändiger, mehrstufiger Vorgang. Zunächst wird die Öl- bzw. Fettschicht im eigentlichen Reinigungsschritt mit Hilfe eines Reinigungsbades entfernt. Häufig umfasst ein Entfettungsverfahren auch noch einen Vorreinigungsschritt. Die Reste der Reinigungslösungen werden anschleißend mit einem oder mehreren aufeinander folgenden Spülbädern entfernt, und schließlich wird die Oberfläche getrocknet. Die Entfettungsbäder müssen in regelmäßigen Abständen entsorgt werden. Zur Entsorgung wird das im Entfettungsbad angesammelte Öl in einem weiteren Arbeitsschritt von der wässrigen Phase abgetrennt. Aufgrund der Anwesenheit von Tensiden im Entfettungsbad sind hierzu weitere Chemikalien (Demulgatoren, Spalter) als Hilfsmittel erforderlich. Einzelheiten zum Entfetten bzw. Entölen von Metallen sowie dazu benötigten Formulierungen und Apparaturen sind beispielsweise in *"*'Metals, Surface Treatment', Ullmann's Encyclopedia of Industrial Chemistry, Sixth Edition, 2000, Wiley-VCH-Verlag GmbH, Weinheim Germany, Electronic Release*"* dargestellt.

Das Entfetten bzw. Entölen erfordert mehr Arbeitschritte und verbraucht mehr Zeit und Heizenergie als der spätere Beschichtungsprozess. Es ist daher äußert wünschenswert, auch nicht entfettete/entölte Metalloberflächen auf einfache Art und Weise weiter verarbeiten zu können.

US 6,540,845 offenbart ein Verfahren zum kombinierten Entfetten und Phosphatieren einer Metalloberfläche. Die Formulierung umfasst zu diesem Zwecke neben Phosphat-, Nitrat- und Zinkionen 12 bis 50 Gew. % organischer Lösemittel. Polymere sind als Bestandteil der Formulierung nicht beschrieben. Die Formulierung wirkt selbst als Entfettungsbad, löst Öl von der Metallobefläche ab, und muss somit regelmäßig wie oben beschrieben aufgearbeitet werden. Weiterhin sind organische Lösemittel als Bestandteil von Formulierungen häufig unerwünscht.

US 4,465,710 offenbart ein Verfahren zum Herstellen von Gegenständen aus Polyurethan-Schäumen, wobei die Gegenstände einen metallischen Kern aufweisen. Hierbei wird eine metallische Platte, welche noch mit einem Rostschutzöl behandelt sein kann, zunächst mit einem Gleit- bzw. Schmiermittel behandelt, welches OH-Gruppen aufweist. Es kann sich hierbei um eine einfache alkoholische Gruppe oder auch um einen Teil einer COOH-Gruppe handeln. Beispielsweise kann das Gleitmittel Poly(meth)acrylsäure umfassen. Danach wird die metallische Platte ausgeformt und ohne weitere Reinigung mit einer Polyurethane-bildenden Zusammensetzung aus Polyolen und Isocyanaten beschichtet. Die Isocyanate reagieren hierbei auch mit den OH-Gruppen des Schmiermittels. Derartige Schmiermittel bieten aber keinen guten Unterrostungsschutz, und es kann nur mit Isocyanat-haltigen Formulierungen beschichtet werden.

WO 04/74372 offenbart die Behandlung, insbesondere die Korrosionsschutzbehandlung von Metalloberflächen mit sauren Polymeren, welche mindestens 50 Gew. % (Meth)acrylsäure, mindestens 0,1 Gew. % anderer, saurer Monomere sowie maximal 30 Gew. % weiterer Monomerer ohne saure Gruppen umfassen.

Aufgabe der Erfindung war es, ein Verfahren bereitzustellen, mit dem ölige bzw. fettige Metalloberflächen ohne einen separaten Entfettungsschritt wirksam vor Korrosion geschützt werden können. Aufgabe war es weiterhin eine Metalloberfläche ohne einen separaten Entfettungsschritt lackierbar zu machen. Hierzu sollten überwiegend wässrige Formulierungen eingesetzt werden.

Dementsprechend wurde ein Verfahren zum Beschichten von metallischen Oberflächen gefunden, bei dem man die Oberfläche des Metalls mit einem Copolymer in Kontakt bringt, wobei die metallische Oberfläche mit Öl- und/oder Fett kontaminiert ist, die Kontamination vor dem Beschichten nicht entfernt wird, und wobei das Copolymer aus folgenden Komponenten aufgebaut ist:
(A) 20 bis 95 Gew. % monoethylenisch ungesättigten Kohlenwasserstoffen und/oder Kohlenwasserstoffen mit zwei konjugierten Doppelbindungen,
(B) 5 bis 50 Gew. % monoethylenisch ungesättigten Monomeren, welche Säuregruppen aufweisen und/oder deren Anhydride oder Salze, sowie
(C) 0 bis 30 Gew. % weiteren, von (A) und (B) verschiedenen, ethylenisch ungesättigten Monomeren.

Weiterhin wurde eine mit einem Copolymer beschichtete Metalloberfläche gefunden, die mittels des erfindungsgemäßen Verfahrens erhältlich ist.

Überraschenderweise wurde gefunden, dass sich durch das erfindungsgemäße Verfahren die metallische Oberfläche mit gutem Ergebnis mit dem erfindungsgemäß verwendeten Copolymer beschichten lässt. Die Beschichtung hat eine gute Korrosionsschutzwirkung und haftet trotz des Fehlens eines Entfettungsschrittes sehr gut auf der metallischen Oberfläche.

### Verzeichnis der Abbildungen:

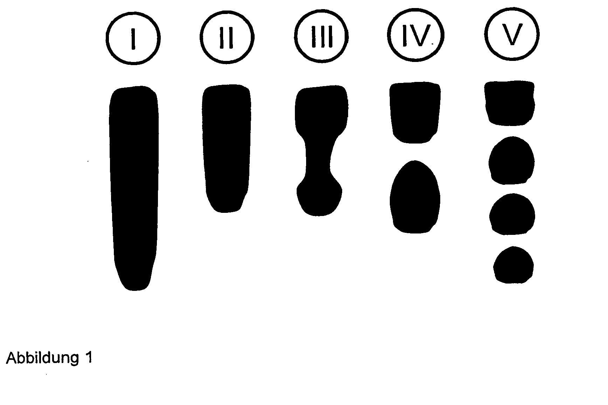

Abb. 1: Ablaufspuren von Wassertropfen auf einem vollständig entölten bzw. entfetteten Blech (I) sowie Blechen mit Öl-Kontamination (II) bis (V) (Kontamination nimmt von (II) nach (V) zu)).

### Zu der Erfindung ist im einzelnen das Folgende auszuführen:

Bei den metallischen Oberflächen, die mittels des erfindungsgemäßen Verfahrens beschichtet werden, kann es sich prinzipiell um beliebige metallische Oberflächen handeln. Beispiele umfassen die Oberflächen von technisch üblichen Metallen bzw. Legierungen wie Eisen, Stahl, verzinktem Stahl, Zn, Al, Cu, Sn, Mg, Co oder Ni.

Es kann sich dabei um die Oberflächen von vollständig aus den besagten Metallen bzw. Legierungen bestehenden Körpern handeln. Es kann sich aber auch um Körper aus anderen Materialien handeln, welche nur eine metallische Beschichtung aufweisen. Die Metalle können als Stückgut, als Mischmetallverbund, als Band oder in anderer Form vorliegen.

Bevorzugt handelt es sich um die Oberfläche von Aluminium oder Stahl, wobei der Stahl auch noch in prinzipiell bekannter Art und Weise eine Beschichtung aufweisen kann. Bei der Beschichtung kann es sich vorzugsweise um Zn, Al, Ni, Sn, Cr oder deren Legierungen untereinander oder mit anderen Metallen handeln. Mit derartigen Legierungen beschichteter Stahl ist kommerziell erhältlich.

Erfindungsgemäß sind die metallischen Oberflächen noch mit Öl und/oder Fett kontaminiert. Auf die Art der Kontamination kommt es hierbei nicht an. Es kann sich beispielsweise um einen die Oberfläche ganz oder teilweise bedeckenden Öl- und/oder Fettfilm handeln. Ein weiteres Beispiel umfasst eine Oberfläche, die mit Öl- und/oder Fetttröpfchen kontaminiert ist. Weiterhin kann es sich beispielsweise auch um Fingerabdrücke handeln.

Bei Ölen und Fetten handelt es sich in prinzipiell bekannter Art und Weise um im Wesentlichen wasserunlösliche organische Verbindungen mit relativ geringem Dampfdruck, deren übereinstimmendes Merkmal nicht die chemische Struktur, sondern die physikalische Konsistenz ist. Es ist der besondere Vorteil der Erfindung, dass sie auch die Beschichtung von Oberflächen erlaubt, die mit weitgehend wasserunlöslichen Ölen bedeckt sind, beispielsweise mit auf Kohlenwasserstoffen basierenden Ölen oder Silikonölen.

Im Regelfalle ist ein Film relativ dünn; es handelt sich zumindest um eine monomolekulare Schicht. Typische Dicken umfassen den Bereich von 1 nm bis 0,1 mm, ohne dass die Erfindung damit auf diesen Bereich beschränkt sein soll. Ein Öl- bzw. Fettfilm kann die Oberfläche vollständig bedecken. Die Vorteile der Erfindung kommen aber auch zum Tragen, wenn der Öl- und Fettfilm die Oberfläche nur teilweise bedeckt, während andere Bereiche der Oberfläche frei von einem Öl- oder Fettfilm sind. Es ist dem Fachmann bekannt, dass beispielsweise mangelnde Lackhaftung oder mangelnder Korrosionsschutz auch nur in einem Teilbereich der Oberfläche die Eigenschaften des gesamten Werkstückes beeinträchtigen können. Im ungünstigsten Falle muss das gesamte Werkstück als Ausschuss betrachtet werden. Im Regelfalle sind zumindest 10 % der zu behandelnden Oberfläche mit Öl- und/oder Fett bedeckt, bevorzugt mindestens 25 %, besonders bevorzugt mindestens 50 % und ganz besonders bevorzugt mindestens 80 %. Die mit Öl- bzw. Fett bedeckten Bereiche können dabei einen einzigen Bereich bilden; es kann sich aber auch um eine größere Anzahl von "Inseln" handeln, die über die Oberfläche verteilt sind. Letzteres ist naturgemäß bei Tröpfchen der Fall, kann aber selbstverständlich auch für Filme zutreffen.

Die Menge des anhaftenden Öls kann durch seine Wirkung definiert werden, beispielsweise durch eine Schmierwirkung oder eine fettende Wirkung, nachweisbar als Fettfleck auf mit dem Metall in Kontakt gebrachtem Papier oder durch eine korrosionsschützende Wirkung.

Bei geringen Mengen sind die genaue Menge und der Bedeckungsgrad des Öls bzw. des Fettes nicht immer auf einfache Art und Weise ohne aufwändige Analytik zu ermitteln. Selbst kleine Mengen von Öl und/oder Fett lassen sich aber über die Ablaufspuren von Wassertropfen auf der Oberfläche des Metalls ermitteln.

Abbildung 1 zeigt charakteristische Ablaufspuren von Wassertropfen auf verschieden stark geölten Blechen. Bei (I) handelt es sich um ein vollständig entöltes bzw. entfettetes Blech, beispielsweise mittels eines tensidhaltigen Reinigungsmittels zu erreichen. Die Bilder (II) bis (V) zeigen typische Ablaufspuren, die mit zunehmender Kontamination mit Öl erhalten werden. Um die Ablaufspuren zu erhalten, wird ein Wassertropfen auf ein horizontal liegendes Blech gebracht, das dann an einer Seite angehoben wird, bis es senkrecht steht.

Auf die Art des Öl- und/oder Fettes kommt es bei der Ausführung der Erfindung nicht an. Insbesondere handelt es sich aber um solche Öle und/oder Fette, die in der Metallverarbeitung üblich sind. Beispielsweise kann es sich um Öle und/oder Fette handeln, welche zum Zwecke des (temporären) Korrosionsschutzes aufgebracht werden können. Ein weiteres Beispiel umfasst Öle, die als Hilfsmittel beim Bearbeiten metallischer Werkstücke, beispielsweise durch Bohren, Fräsen oder Drehen eingesetzt werden, oder als Schmiermittel zur Verarbeitung von Metallen, beispielsweise durch Tiefziehen oder Walzen aufgebracht werden können.

Es kann sich aber auch um Öl- und/oder Fettkontaminationen handeln, welche bei Transport, Verarbeitung, Lagerung oder beim Hantieren metallischer Körper an sich unbeabsichtigt auf der metallischen Oberfläche verbleiben können. Beispielhaft sei auf Fettspuren verwiesen, die beim Hantieren mit der bloßen Hand auf der metallischen Oberfläche zurückbleiben können, also durch Übertrag von Fetten von der Hautoberfläche auf die Oberfläche des metallischen Werkstoffes.

Beispiele von Ölen und/oder Fetten umfassen insbesondere aliphatische, naphthenische oder aromatische Mineralöle, Silikonöle, Öle auf Basis von Polyalkylenglykolen oder fette Öle. Die Öl- und/oder Fettschichten können darüber hinaus auch noch typische Hilfsstoffe oder Additive enthalten. Beispiele umfassen ionische und/oder nichtionische Tenside, Korrosionsschutzadditive Biozide, Farbstoffe, anorganische Zuschlagstoffe, Molybdänsulfid, Graphit, Talkum, Phosphate und Phosphonate. Weiterhin kann es sich auch um Emulsionen von Ölen- und/oder Fetten handeln.

Erfindungsgemäß wird die mit Öl- und oder Fett kontaminierte metallische Oberfläche zum Beschichten mit einem Copolymer in Kontakt gebracht. Das Copolymer ist mindestens aufgebaut aus den zwei Monomerbausteinen (A) und (B). Optional können daneben noch die Bausteine (C) vorhanden sein.

Als Komponente (A) werden 20 bis 95 Gew. % monoethylenisch ungesättigte Kohlenwasserstoffe (A1) und/oder Kohlenwasserstoffe mit zwei konjugierten Doppelbindungen (A2), jeweils bezogen auf die Gesamtmenge aller monomeren Einheiten eingesetzt. Bevorzugt beträgt die Menge der Komponente (A) 50 bis 95 Gew. %, besonders bevorzugt 70 bis 90 Gew. %. Selbstverständlich können auch Gemische verschiedener Monomere (A) eingesetzt werden.

Bei den monoethylenisch ungesättigten Kohlenwasserstoffen (A1) kann es sich um alle Kohlenwasserstoffe handeln, die eine ethylenisch ungesättigte Gruppe aufweisen. Es kann sich um geradkettige oder verzweigte aliphatische und/oder alicyclische Kohlenwasserstoffe handeln. Es kann sich auch um Kohlenwasserstoffe handeln, die neben der ethylenischen Gruppe aromatische Reste aufweisen. In der Regel weisen die eingesetzten ethylenisch ungesättigten Kohlenwasserstoffe 2 bis 18 C-Atome auf, bevorzugt 2 bis 12 C-Atome und besonders bevorzugt 2 bis 8 C-Atome.

Beispiele geeigneter Kohlenwaserstoffe umfassen Ethen, Propen, 1-Buten, 2-Buten, 1-Penten, 1-Hexen, 1-Hepten, 1-Octen, 1-Nonen, 1-Decen, 1-Undecen, 1-Dodecen, Styrol, α-Methylstyrol oder Norbornen. Bevorzugt handelt es sich um mindestens einen Kohlenwasserstoff, ausgewählt aus der Gruppe von Ethen, Propen, 1-Buten, 2-Buten, 1-Penten, 1-Hexen, 1-Hepten oder 1-Octen.

Bei den Kohlenwasserstoffe mit zwei konjugierten Doppelbindungen (A2) handelt es sich insbesondere um Butadien, Isopren, Neopren oder Derivate davon.

Besonders bevorzugt handelt es sich bei der Komponente (A) um Ethen. In einer weiterhin besonders bevorzugten Ausführungsform der Erfindung handelt es sich bei (A) um ein Gemisch aus mindestes 50 mol % Ethen sowie einem oder mehreren, davon verschiedenen ethylenisch ungesättigten Kohlenwasserstoffen, wobei die Mengenangaben hier auf die Gesamtmenge aller vorhandenen Monomere (A) bezogen sind. Hierdurch kann der Fachmann die Eigenschaften des Copolymers maßschneidern. Bevorzugt handelt es sich bei (A) zu mindestens 75 mol % und besonders bevorzugt zu mindestens 90 mol % um Ethen. Als weitere ethylenisch ungesättigte Kohlenwasserstoffe neben Ethen kommen insbesondere 1-Olefine wie Propen, 1-Buten, 1-Penten, 1-Hexen, 1-Hepten, 1-Octen, 1-Nonen, 1-Decen, 1-Undecen, 1-Dodecen oder Styrol in Frage.

Bei der Komponente (B) handelt es sich um 5 bis 50 Gew. % monoethylenisch ungesättigter Monomere, welche Säuregruppen aufweisen. Die Säuregruppen können auch ganz oder teilweise als Derivate, insbesondere in Form von Salzen und/oder Anhydriden vorliegen. Bevorzugt beträgt die Menge der Komponente (B) 10 bis 40 Gew. %, besonders bevorzugt 10 bis 30 Gew. %. Selbstverständlich können auch Gemische verschiedener Monomere (B) eingesetzt werden.

Bei der sauren Gruppe kann es sich um beliebige saure Gruppen handeln. Bevorzugt handelt es sich um mindestens eine Gruppe ausgewählt aus der Gruppe von Carboxylgruppen, Sulfonsäuregruppen oder Phosphonsäuregruppen.

Bevorzugt handelt es sich bei den Monomeren (B) um Verbindungen mit 2 bis 12 C-Atomen. Beispiele geeigneter Verbindungen (B) umfassen Acrylsäure, Methacrylsäure, Crotonsäure, Vinylessigsäure, Maleinsäure, Fumarsäure, Itaconsäure, Maleinsäureanhydrid, C₁ bis C₄-Halbester von monoethylenisch ungesättigten Dicarbonsäuren, Acrylamidopropylsulfonsäure, Vinylsulfonsäure, Allylsulfonsäure oder Vinylphosphonsäure. Bevorzugt handelt es sich bei (B) um Acrylsäure und Meth acrylsäure, besonders bevorzugt ist Methacrylsäure.

Erfindungsgemäß beträgt die Summe der Mengen von (A) und (B) mindestens 70 Gew. %, jeweils bezogen auf die Gesamtmenge aller Komponenten des Copolymers. Neben den Monomeren (A) und (B) können optional noch bis zu 30 Gew. % weiterer Monomere (C) eingesetzt werden. Derartige Monomere können vom Fachmann zur Feineinstellung der Eigenschaften des eingesetzten Copolymers eingesetzt werden. Es können prinzipiell beliebige Comonomere (C) eingesetzt werden. Die Auswahl ist nur insofern beschränkt, als die Comonomere mittels der gewählten Polymerisationstechnik mit den Komponenten (A) und (B) copolymerisierbar sein müssen. Der Fachmann trifft je nach den gewünschten Eigenschaften des Copolymers eine geeignete Auswahl.

Bei der optional vorhandenen Komponente (C) handelt es sich um ethylenisch ungesättigte Monomere, die von (A) und/oder (B) verschieden sind. Selbstverständlich können auch Gemische verschiedener Comonomere (C) eingesetzt werden. Beispiele geeigneter Monomere (C) umfassen insbesondere Derivate von ethylenisch ungesättigten Carbonsäuren. Beispiele umfassen geradkettige oder verzweigte Alkylester von (Meth)acrylsäure, wie Methyl(meth)acrylat, Ethyl(meth)acrylat, Butyl(meth)acrylat oder 2-Ethylhexyl(meth)acrylat sowie weiterhin (Meth)acrylamid, Alkyl(meth)acrylamide oder Vinylacetat.

Bei den Comonomeren (C) kann es sich auch um vernetzend wirkende Monomere handeln. Vernetzend wirkende Monomere weisen zwei oder mehrere isolierte, ethylenisch ungesättigte Gruppen auf. Beispiele geeigneter Vernetzer umfassen (Meth)acrylate von zwei- oder mehrwertigen, bevorzugt aliphatischen Alkoholen, wie Ethylenglykoldi(meth)acrylat, Butandioldi(meth)acrylat oder Hexandioldi(meth)acylat. Art und Menge des Vernetzers werden vom Fachmann je nach der Art der gewünschten Eigenschaften des Copolymers ausgewählt. Ein zu hoher Vernetzungsgrad sollte aber vermieden werden.

Die Comonomere (C) werden in einer Menge von 0 bis 30 Gew. %, bevorzugt 0 bis 20 Gew. % und besonders bevorzugt 0 bis 10 Gew. % eingesetzt. Die Menge von vernetzenden Comonomeren sollte im Regelfalle 5 Gew. %, bevorzugt 3 Gew. % nicht überschreiten. Die Mengen beziehen sich jeweils auf die Gesamtmenge aller eingesetzten Monomere (A), (B) und (C).

Die Komponenten (A), (B) und optional (C) können in prinzipiell bekannter Art und Weise miteinander polymerisiert werden. Entsprechende Polymerisationstechniken sind dem Fachmann bekannt. Bevorzugt werden die Copolymere durch freie radikalische Copolymerisation der genannten Komponenten (A), (B) und optional (C) hergestellt. Die Mengenverhältnisse der eingesetzten Komponenten sind bereits vorstehend genannt. Die freie radikalische Copolymerisation kann beispielsweise in Lösung, Emulsion, Dispersion, Suspension oder Substanz erfolgen. Bevorzugt kann die Polymerisation in Lösung erfolgen.

Besonders bevorzugt zum Einsatz im erfindungsgemäßen Verfahren sind Copolymere aus Ethen und Comonomeren aus der Gruppe Acrylsäure, Methacrylsäure, Maleinsäure und Maleinsäureanhydrid, und welche 50 bis 95 Gew. %, bevorzugt 70 bis 90 Gew. % aus Ethen enthalten.

In einer weiteren, bevorzugten Ausführungsform der Erfindung ist ein Teil der im Copolymer vorhandenen Säurefunktionen neutralisiert. Als Basen zum Neutralisieren kommen insbesondere Ammoniak, Amine, Aminoalkohole oder geeignete Metallverbindungen in Frage, beispielweise Hydroxide, Oxide oder Carbonate. Bevorzugt als Metallkationen als Gegenionen sind Na⁺, K⁺, Ca²⁺, Sr²⁺, Mg²⁺, Ce(III), Ni, Mn(II), Cr(III), Fe(II), Fe(III), Co(II), Co(III), Al(III). Bevorzugte Amine sind Alkylamine mit bis zu 24 C-Atomen sowie Aminoalkohole, die bis zu 24 C-Atome sowie Struktureinheiten des Typs -N-C₂H₄-O- und -N-C₂H₄-OH und -N-C₂H₄-O-CH₃ aufweisen. Beispiele derartiger Aminoalkohole umfassen Ethanolamin, Diethanolamin, Triethanolamin und ihre methylierten Derivate.

Bevorzugt sind 0.5 mol % bis 50 mol % der im Copolymer vorhanden Säuregruppen neutralisiert, besonders bevorzugt 1 bis 40 mol % und ganz besonders bevorzugt 2 bis 30 mol %.

Zum erfindungsgemäßen Beschichtungsverfahren wird die Oberfläche des Metalls mit dem Copolymer in Kontakt gebracht. Selbstverständlich können auch Gemische zweier oder mehrerer verschiedener Copolymere eingesetzt werden.

Das Copolymer kann hierzu ohne Lösungsmittel eingesetzt werden und beispielsweise mittels einer Pulverlackierung aufgebracht werden. Die Formulierung zum Pulverlackieren kann optional typische Hilfsstoffe und/oder Additive umfassen.

Bevorzugt wird das erfindungsgemäß eingesetzte Copolymer zum Beschichten als Formulierung in einem geeigneten Lösemittel oder einem Gemisch verschiedener Lösemittel eingesetzt. Bevorzugt wird nur Wasser als Lösemittel eingesetzt. Weitere Komponenten eines Gemisches umfassen insbesondere mit Wasser mischbare Lösungsmittel. Beispiele umfassen Monoalkohole wie Methanol, Ethanol oder Propanol, höhere Alkohole wie Ethylenglykol oder Polyetherpolyole und Etheralkohole wie Butylglykol oder Methoxypropanol. Ein bevorzugtes Gemisch mit organischen Lösemitteln umfasst mindestens 75 Gew. %, besonders bevorzugt mindestens 85 Gew. % und ganz besonders bevorzugt mindestens 95 Gew. % Wasser. Die Angaben beziehen sich jeweils auf die Gesamtmenge aller Lösemittel.

Das Copolymer kann im Lösemittelgemisch gelöst oder dispergiert vorliegen. Bevorzugt handelt es sich um eine Dispersion des Copolymers. Die Konzentration des Copolymers beträgt in der Regel 0,1 bis 50 Gew. %, bevorzugt 1 bis 30 Gew. % und besonders bevorzugt 3 bis 15 Gew. %. Diese Mengenangaben beziehen sich auf die Summe aller Komponenten der Formulierung. Bevorzugt wird das Copolymer nur in Wasser formuliert und die Konzentration des Copolymers beträgt 0,5 bis 50 Gew. %.

Die Formulierung kann über die genannten Komponenten hinaus noch optional weitere Komponenten umfassen. Hierbei kann es sich beispielsweise um anorganische oder organische Säuren handeln. Weitere optionale Komponenten umfassen oberflächenaktive Verbindungen, Korrosionsinhibitoren, typische Galvanohilfsmittel oder auch weitere, von den erfindungsgemäßen Polymeren verschiedene Polymere.

Von den erfindungsgemäßen Polymeren verschiedene Polymere können zur Feineinstellung der Eigenschaften der Schicht eingesetzt. Hierbei können insbesondere Polymere mit sauren Gruppen und ganz besonders COOH-Gruppen umfassende Polymere eingesetzt werden. Beispiele derartiger Polymere umfassen Polyacrylsäuren verschiedenen Molekulargewichtes oder auch Copolymere aus Acrylsäure und anderen saueren Monomeren. Die Menge derartiger sekundärer Polymerer sollte im Regelfalle 50 Gew. % bezüglich der Menge aller eingesetzten Polymere nicht überschreiten. Bevorzugt beträgt deren Menge 0 bis 30 Gew. %, besonders bevorzugt 0 bis 20 Gew. % und ganz besonders bevorzugt 0 bis 10 Gew. %.

Der Fachmann trifft unter den prinzipiell möglichen optionalen Komponenten sowie ihren Mengen je nach der gewünschten Anwendung eine entsprechende Auswahl,

Zum Beschichten wird die Oberfläche des Metalls mit der Zubereitung in Kontakt gebracht, beispielsweise durch Spritzen, Sprühen, Tauchen, Streichen oder elektrophoretischem Lackieren.

Nach einem Tauchprozess kann man zum Entfernen überschüssiger Formulierung das Werkstück abtropfen lassen; bei Blechen, Metallfolien oder dergleichen lässt sich überschüssige Formulierung aber beispielsweise auch abquetschen oder abrakeln. Bei der Behandlung werden zumindest Teile des eingesetzten Polymers sowie gegebenenfalls weitere Komponenten der Formulierung von der Oberfläche des Metalls chemisorbiert und/oder reagieren mit der Oberfläche, so dass eine feste Bindung zwischen Oberfläche und den Komponenten zustande kommt. Die Beschichtung mit der Formulierung erfolgt im Regelfalle bei Raumtemperatur (15 bis 45°C) ohne dass damit höhere Temperaturen prinzipiell ausgeschlossen werden sein sollen. Im Regelfalle erfolgt die Beschichtung bei 20 bis 90°C, bevorzugt 25 bis 80°C und besonders bevorzugt 30 bis 60°C. Hierzu kann das Bad mit der Formulierung geheizt werden, eine erhöhte Temperatur kann sich aber auch automatisch einstellen, indem man warmes Metall in das Bad eintaucht.

Es kann sich bei der Beschichtung auch um einen so genannten "No-rinse" Prozess handeln, bei dem die Formulierung unmittelbar nach dem Aufbringen ohne Abspülen direkt in einem Trockenofen eingetrocknet wird. Es ist aber auch möglich, die Oberfläche nach der Behandlung mit einer Reinigungsflüssigkeit, insbesondere mit Wasser, nachzuspülen, um Reste der eingesetzten Formulierung von der Oberfläche zu entfernen.

Das erfindungsgemäße Verfahren kann diskontinuierlich oder bevorzugt kontinuierlich erfolgen. Bei einem diskontinuierlichen Verfahren kann es sich beispielsweise um ein Tauchverfahren für Stückgut handeln, bei dem das Stückgut an Gestellen aufgehängt sein kann oder in perforierten Trommeln als lose Ware vorliegen kann. Ein kontinuierliches Verfahren eignet sich insbesondere zum Behandeln von Bandmetallen. Das Metallband wird hierbei durch eine Wanne oder eine Sprühvorrichtung mit der Zubereitung sowie optional durch weitere Vor- oder Nachbehandlungsstationen gefahren. Eine Entfettungsstation wie bei konventionellen Verfahren ist nicht erforderlich.

Die Behandlungsdauer mit der Formulierung wird vom Fachmann je nach den gewünschten Eigenschaften der Schicht, der zur Behandlung eingesetzten Formulierung und den technischen Rahmenbedingungen festgelegt. Sie kann deutlich weniger als eine Sekunde oder mehrere Minuten betragen. Beim kontinuierlichen Verfahren hat es sich besonders bewährt, die Oberfläche mit der Zubereitung für eine Dauer von 1 bis 60 s in Kontakt zu bringen.

Nach der Behandlung wird das eingesetzte Lösemittel entfernt. Die Entfernung kann bei Raumtemperatur durch einfaches Verdampfen an Luft bei Raumtemperatur erfolgen.

Das Entfernen des Lösemittels kann aber auch durch geeignete Hilfsmittel unterstützt werden, beispielsweise durch Erwärmung und/oder durch Überleiten von Gasströmen, insbesondere Luftströmen, beispielsweise durch Trocknen in einem Trockenkanal. Das Abdampfen des Lösemittels kann auch durch IR-Strahler unterstützt werden. Bewährt hat sich zum Trocknen eine Temperatur von 40°C bis 160°C, bevorzugt 50°C bis 150°C und besonders bevorzugt 70°C bis 130°C. Gemeint ist hiermit die Temperatur auf der Metalloberfläche; die Trocknertemperatur muss gegebenenfalls höher eingestellt werden und wird vom Fachmann entsprechend gewählt.

Mittels des erfindungsgemäßen Verfahrens ist eine mit dem oben geschilderten Copolymer beschichtete Metalloberfläche erhältlich. Die Beschichtung ist unmittelbar auf der Metalloberfläche aufgebracht und umfasst das erfindungsgemäß eingesetzte Copolymer, optional weitere Komponenten sowie Öle und Fette, mit denen die Oberfläche beschichtet war. Diese Öle und/oder Fette können bevorzugt homogen in der Copolymerschicht verteilt vorliegen, sie können in dieser Schicht aber auch Aggregate bilden, zum Beispiel durch Mikrophasenseparation.

Die Dicke der Beschichtung wird vom Fachmann je nach den gewünschten Eigenschaften der Schicht eingestellt. Im Regelfalle beträgt die Dicke 0,1 bis 20 µm, bevorzugt 0,5 bis 5 µm. Die Dicke lässt sich beispielsweise über die Art und Menge der aufgetragenen Komponenten sowie die Einwirkzeit beeinflussen. Bevorzugt ist die Einstellung der Schichtdicke über die Konzentration des Copolymers in der zur Beschichtung eingesetzten wässrigen Formulierung. Weiterhin lässt sie sich durch verfahrenstechnische Parameter beeinflussen, beispielsweise durch Abrakeln oder Abwalzen zu viel aufgebrachter Behandlungslösung.

Die metallische Oberfläche mit der erfindungsgemäßen Beschichtung kann in prinzipiell bekannter Art und Weise mit einer oder mehreren weiteren, übereinander aufgebrachten Lackschichten versehen werden. Beispielsweise kann es sich um farb- oder effektgebende Lackschichten handeln. Typische Lacke, deren Zusammensetzung sowie typische wie Schichtfolgen bei mehreren Lackschichten sind dem Fachmann prinzipiell bekannt. Es ist ein besonderer Vorteil der Erfindung, dass die erfindungsgemäß aufgebrachte Beschichtung mit handelsüblichen Lacken gut überlackierbar ist.

### Die folgenden Beispiele sollen die Erfindung näher illustrieren:

Bereitstellung einer Metalloberfläche mit Ölschicht

Zum kontrollierten Aufbringen eines Ölfilmes wurden Aluminiumbeche (Aluminium AIMg1) in Öl getaucht und anschließend mit heißem Wasser abgespült (50°C, 1 min). Auf dem Blech verblieb eine dünne Ölschicht.

Als Öl wurden Paraffinöl oder Silikonöl eingesetzt. Ein Blech wurde zu Vergleichszwecken auf übliche Art und Weise entfettet/entölt.

Der Unterschied zwischen den unterschiedlich präparierten Blechen hinsichtlich des Kontaminationgrades mit Öl, kann über die Ablaufspuren von Wassertropfen ermittelt werden. Typische Ablaufspuren sind -wie bereits oben erläutert- in Abbildung 1 gezeigt. Die präparierten Bleche mit Ölschicht weisen die Ablaufspur (V) auf, das entölte Blech Ablaufspur (I).

### Beschichten mit erfindungsgemäßem Copolymer

Für die Beschichtungsversuche wurde eine wässrige Dispersion eines Copolymers aus 74 Gew. % Ethylen sowie 26 Gew. % Methacrylsäure eingesetzt. Ferner wurde eine wässrige Dispersion eines Copolymers aus 80 Gew. % Ethylen sowie 20 Gew. % Methacrylsäure eingesetzt. Die Konzentration des Copolymers hatte den in Tabelle 1 angegebenen Wert, die COOH-Gruppen waren teilweise mit Diethanolamin neutralisiert. Der pH-Wert der Dispersion betrug ca. 9.

Die Beschichtung erfolgte durch Eintauchen der Bleche in die wässrige Dispersion getaucht (Dauer 5 s). Nach dem Eintauchen wurden die Bleche bei 120°C getrocknet.

Zu Vergleichszwecken wurde ein Blech mit einem handelsüblichen Primer behandelt (Glasurit^{®} PKW-Grundfüller VDC 283-150 + Zusatzlösung 352-228, beides Produkte der BASF Coatings AG, Münster Die Komponenten werden 2/1 gemischt).

Weitere Vergleichsbleche wurden mit einem nicht erfindungsgemäßen Copolymer aus Styrol (50 Gew.%), n-Butylacrylat (47 Gew.%) und Acrylsäure (3 Gew.%) behandelt.

Nach der Trocknung werden die Bleche mit einem handelsüblichen Decklack (2 Teile Glasurit^{®} HS-2K-22-RAL 9010 weiß + 1 Teil Härter 929-93 + 10Vol.% Einzelzusatz 352-91 der BASF Coatings AG, Münster) überzogen. Der Decklack wird mit einem 50 µm Rakel mit einer Geschwindigkeit von 12,5 mm/sec aufgerakelt und bei RT getrocknet.

### Korrosionsschutzprüfung und Prüfung der Haftung

Für die Prüfung in der Salzsprühkammer werden die Bleche mit einem Normritz von 1mm versehen und der Salzsprühnebeltest nach DIN 50021 durchgeführt. Die Unterostung wird mit der Unterrostungszahl r = (c - 0,5) / 2 beschrieben, wobei c = Ausdehnung der Unterrostung nach beiden Seiten in mm ist.

Die Haftung wird nach DIN EN ISO 2409 getestet und mit Gitterschnitt-Kennwerten bewertet, wobei "0" eine sehr gute und "5" eine sehr schlechte Bewertung bedeutet.

Die Ergebnisse der Beispiele und Vergleichsbeispiele sind in Tabelle 1 angegeben.

**Tabelle 1: Ergebnisse der Versuche und Vergleichsversuche**

| | **Art des Öls** | **Entfettung** | **Beschichtung** | | **Gitterschnitt Bewertung** | **Unterrostung, nach 24 h Salzsprühtest [r]** |
|---|---|---|---|---|---|---|
| | | | **Grundierung** | **Decklack** | | |
| **Vergleichsbeispiel 1** | Paraffinöl | nein | keine | ja | 5 | > 25 |
| **Vergleichsbeispiel 2** | Paraffinöl | nein | handelsüblicher Primer | ja | 5 | > 25 |
| **Vergleichsbeispiel 3** | Paraffinöl | ja | keine | ja | 5 | >25 |
| **Vergleichsbeispiel 4** | Paraffinöl | nein | Copolymer aus Styrol, n- Butylacrylat und Acrylsäure (50/47/3) | ja | 5 | > 25 |
| | | | | | | |
| **Beispiel 1** | Paraffinöl | nein | Ethylen/MAS-Copolymer, 10% in Wasser | ja | 1 | 0 |
| **Beispiel 2** | Paraffinöl | nein | Ethylen/AS-Copolymer, 10% in Wasser | ja | 1 | 0 |
| **Beispiel 3** | Silikonöl | nein | Ethylen/MAS-Copolymer, 10% in Wasser | ja | 1 | 0,5 |

Die Versuche und Vergleichsversuche zeigen, dass sich mittels des erfindungsgemäßen Verfahrens auch Oberflächen von nicht entfetteten bzw. entölten Metallen beschichten lassen. Durch die erfindungsgemäße Beschichtung wird eine hervorragende Haftung einer nachfolgenden Decklackschicht vermittelt. Gleichzeitig wird auch eine sehr gute Korrosionsschutzwirkung erhalten.

Bei Verwendung anderer Polymere, welche zwar erforderliche Menge an Kohlenwasserstoff-Monomeren, aber weniger als 5 % Säuregruppen aufweisende Monomere enthalten, werden keine befriedigenden Ergebnisse erreicht. Die Haftung auf nicht entölten Öberflächen ist mangelhaft.

Mittels des erfindungsgemäßen Verfahrens lässt sich die Zahl der notwendigen Verfahrensschritte bei der Beschichtung von Öl- und Fettschichten aufweisenden Metallen im Vergleich zum Stand der Technik verringern. In der nachfolgenden Tabelle 2 wird beispielhaft die Anzahl der Behandlungsschritte bei technisch üblichen Verfahren mit dem erfindungsgemäßen Verfahren am Beispiel des Tauchens verglichen.

**Tabelle 2: Vergleich der Erfindung mit dem Stand der Technik**

| **Technisch übliche Lackierung von Stahl ohne Phosphatierung** | | **Technisch übliche Lackierung von Aluminium** | | **Erfindungsgemäßes Verfahren (Methode 1)** | | **Erfindungsgemäßes Verfahren (Methode 2** | |
|---|---|---|---|---|---|---|---|
| 1. | Entfetten | 1. | Entfetten | 1. | Tauchen in Copolymer- Formulierung | 1. | Tauchen in Co-polymer-Formulierung |
| 2. | Spülen | 2. | Spülen | | | | |
| 3. | Trocknen | 3. | Chromathaltig Vorbehandlung | 2. | Trocknen | 2. | Trocknen |
| 4. | Primer | | | | | 3. | Decklack |
| 5. | Trocknen | 4. | Spülen 1 | | | | |
| 6. | Decklack | 5. | Spülen 2 | | | 4. | Trocknen |
| 7. | Trocknen | 6. | Trocknen | | | | |
| | | 7. | Primer | | | | |
| | | 8. | Trocknen | | | | |
| | | 9. | Decklack | | | | |
| | | 10. | Trocknen | | | | |

## Patentansprüche

1. Verfahren zum Beschichten von metallischen Oberflächen, bei dem man die Oberfläche des Metalls mit einem Copolymer in Kontakt bringt, **dadurch gekennzeichnet, dass** die metallische Oberfläche mit Öl- und/oder Fett kontaminiert ist, die Kontamination vor dem Beschichten nicht entfernt wird, und wobei das Copolymer aus folgenden Komponenten aufgebaut ist:
(A) 20 bis 95 Gew. % monoethylenisch ungesättigten Kohlenwasserstoffen und/oder Kohlenwasserstoffen mit zwei konjugierten Doppelbindungen,
(B) 5 bis 50 Gew. % monoethylenisch ungesättigten Monomeren, welche Säuregruppen aufweisen und/oder deren Anhydride oder Salze, sowie
(C) 0 bis 30 Gew. % weiteren, von (A) und (B) verschiedenen, ethylenisch ungesättigten Monomeren.

2. Verfahren gemäß Anspruch 1, **dadurch gekennzeichnet, dass** es sich bei (A) um mindestens ein Alken ausgewählt aus der Gruppe von Ethen, Propen, 1-Buten, 2-Buten, 1-Penten, 1-Hexen, 1-Hepten oder 1-Octen handelt.

3. Verfahren gemäß Anspruch 1 oder 2, **dadurch gekennzeichnet, dass** es sich bei der sauren Gruppe in (B) um mindestens eine Gruppe ausgewählt aus der Gruppe von Carboxylgruppen, Sulfonsäuregruppen oder Phosphonsäuregruppen handelt.

4. Verfahren gemäß Anspruch 3, **dadurch gekennzeichnet, dass** es sch bei (A) um Ethen und bei (B) um (Meth)acrylsäure handelt.

5. Verfahren gemäß einem der Ansprüche 1 bis 4, **dadurch gekennzeichnet, dass** 0,5 bis 50 mol % der im Copolymer vorhandenen Säuregruppen neutralisiert sind.

6. Verfahren gemäß einem der Ansprüche 1 bis 5, **dadurch gekennzeichnet, dass** das Copolymer in Form einer Formulierung mit Wasser oder einem mindestens 75 Gew. % Wasser umfassenden wässrigen Lösemittelgemisch eingesetzt wird.

7. Verfahren gemäß Anspruch 6, **dadurch gekennzeichnet, dass** das Copolymer nur in Wasser formuliert wird und die Konzentration des Copolymers 0,5 bis 50 Gew. % bezüglich der Summe aller Komponenten der Formulierung beträgt.

8. Verfahren gemäß einem der Ansprüche 1 bis 5, **dadurch gekennzeichnet, dass** man das Copolymer mittels einer Pulverlackierung aufbringt.

9. Verfahren gemäß Anspruch 6 oder 7, **dadurch gekennzeichnet, dass** man das Copolymer mittels Spritzen, Sprühen, Tauchen, Streichen oder elektrophoretischem Lackieren aufbringt.

10. Verfahren gemäß einem der Ansprüche 1 bis 9, **dadurch gekennzeichnet, dass** es sich bei dem Metall um eines ausgewählt aus der Gruppe von Aluminium, Stahl oder mit Zn, Al, Ni, Sn, Cr oder deren Legierungen beschichtetem Stahl handelt.

11. Mit einem Copolymer beschichtete Metalloberfläche, erhältlich nach einem Verfahren gemäß einem der Ansprüche 1 bis 10.

12. Beschichtete Metalloberfläche gemäß Anspruch 11, **dadurch gekennzeichnet, dass** die Dicke der copolymerhaltigen Schicht 0,1 bis 20 µm beträgt.

13. Beschichtete Metalloberfläche gemäß Anspruch 11 oder 12, **dadurch gekennzeichnet, dass** sich auf der copolymerhaltigen Schicht weiterhin noch eine oder mehrere übereinander aufgebrachte Lackschichten befinden.

## Claims

1. A process for coating metallic surfaces, in which the surface of the metal is contacted with a copolymer, wherein the metallic surface is contaminated with oil and/or grease, the contamination is not removed prior to coating, and where the copolymer is synthesized from the following components:
(A) 20% to 95% by weight of monoethylenically unsaturated hydrocarbons and/or hydrocarbons having two conjugated double bonds,
(B) 5% to 50% by weight of monoethylenically unsaturated monomers which contain acid groups, and/or the anhydrides or salts thereof, and
(C) 0 to 30% by weight of further ethylenically unsaturated monomers other than (A) and (B).

2. The process according to claim 1, wherein (A) comprises at least one alkene selected from the group consisting of ethene, propene, 1-butene, 2-butene, 1-pentene, 1-hexene, 1-heptene and 1-octene,

3. The process according to claim 1 or 2, wherein the acidic group in (B) is at least one group selected from the group consisting of carboxyl groups, sulfonic acid groups and phosphonic acid groups.

4. The process according to claim 3, wherein (A) is ethene and (B) is (meth)acrylic acid.

5. The process according to any one of claims 1 to 4, wherein 0.5 to 50 mol% of the acid groups present in the copolymer are in neutralized form.

6. The process according to any one of claims 1 to 5, wherein the copolymer is used in the form of a formulation with water or with an aqueous solvent mixture comprising at least 75% by weight of water.

7. The process according to claim 6, wherein the copolymer is formulated only in water and the concentration of the copolymer is 0.5 to 50% by weight, based on the sum of all components of the formulation.

8. The process according to any of claims 1 to 5, wherein the copolymer is applied by powder coating.

9. The process according to claim 6 or 7, wherein the copolymer is applied by spraying, squirting, dipping, brushing or electrophoretic coating.

10. The process according to any one of claims 1 to 9, wherein the metal is a metal selected from the group consisting of aluminum, steel, and steel coated with Zn, Al, Ni, Sn, Cr or alloys thereof.

11. A metal surface coated with a copolymer and obtainable by a process according to any one of claims 1 to 10.

12. The coated metal surface according to claim 11, wherein the thickness of the copolymer-containing coat is 0.1 to 20 µm.

13. The coated metal surface according to claim 11 or 12, wherein atop the copolymer-containing coat there are also one or more coating films applied one atop another.

## Revendications

1. Procédé pour revêtir des surfaces métalliques, dans lequel on met en contact la surface du métal avec un copolymère, **caractérisé en ce que** la surface métallique est contaminée par de l'huile et/ou de la graisse, la contamination n'étant pas éliminée avant d'effectuer le revêtement, et dans lequel le copolymère est constitué des composants suivants :
(A) 20 à 95 % en poids d'hydrocarbures à insaturation monoéthylénique et/ou d'hydrocarbures contenant deux doubles liaisons conjuguées,
(B) 5 à 50 % en poids de monomères à insaturation monoéthylénique, qui présentent des groupements acides et/ou leurs anhydrides ou sels, ainsi que
(C) 0 à 30 % en poids d'autres monomères à insaturation éthylénique différents des composés (A) et (B).

2. Procédé selon la revendication 1, **caractérisé en ce que** le composé (A) est au moins un groupement alcène choisi dans le groupe constitué de l'éthène, du propène, du 1-butène, du 2-butène, du 1-pentène, du 1-hexène, du 1-heptène ou du 1-octène.

3. Procédé selon la revendication 1 ou 2, **caractérisé en ce que** le groupement acide du composé (B) est au moins un groupement choisi parmi les groupements carboxyle, les groupements acide sulfonique ou les groupements acide phosphonique.

4. Procédé selon la revendication 3, **caractérisé en ce que** le composé (A) est l'éthène et le composé (B) l'acide (méth)acrylique.

5. Procédé selon l'une quelconque des revendications 1 à 4, **caractérisé en ce que** 0,5 à 50 % en mole des groupements acide présents dans le copolymère sont neutralisés.

6. Procédé selon l'une quelconque des revendications 1 à 5, **caractérisé en ce que** le copolymère est utilisé sous la forme d'une formulation réalisée avec de l'eau ou d'un mélange aqueux de solvants comprenant au moins 75 % en poids d'eau.

7. Procédé selon la revendication 6, **caractérisé en ce que** le copolymère est formulé seulement dans de l'eau et **en ce que** la concentration du copolymère représente 0,5 à 50 % en poids par rapport à la somme de tous les composants de la formulation.

8. Procédé selon l'une quelconque des revendications 1 à 5, **caractérisé en ce que** l'on applique le copolymère selon une technique de revêtement par pulvérisation.

9. Procédé selon la revendication 6 ou 7, **caractérisé en ce que** l'on applique le copolymère par projection, pulvérisation, immersion, application à la brosse ou électrodéposition.

10. Procédé selon l'une quelconque des revendications 1 à 9, **caractérisé en ce que** le métal est choisi dans le groupe constitué de l'aluminium, de l'acier ou de l'acier revêtu de l'élément Zn, Al, Ni, Sn, Cr ou de leurs alliages.

11. Surface métallique revêtue d'un copolymère, que l'on peut obtenir à l'aide d'un procédé selon l'une quelconque des revendications 1 à 10.

12. Surface métallique revêtue selon la revendication 11, **caractérisée en ce que** l'épaisseur de la couche contenant le copolymère est de 0,1 à 20 µm.

13. Surface métallique revêtue selon la revendication 11 ou 12, **caractérisée en ce que** l'on trouve encore, sur la couche contenant le copolymère, une ou plusieurs couches de vernis supplémentaires, appliquées l'une sur l'autre.
